# EUROPÄISCHE PATENTSCHRIFT

(11) **EP 3 726 094 B1**
(45) Veröffentlichungstag und Bekanntmachung des Hinweises auf die Patenterteilung: **27.05.2026**
(21) Anmeldenummer: 19169238.3
(22) Anmeldetag: 15.04.2019
(51) Int. Cl.: F16F 15/00, B23Q 11/00, F16F 15/027, G05D 19/02

(54) **STATIONÄRES SCHWINGUNGSISOLATIONSSYSTEM SOWIE VERFAHREN ZU DESSEN REGELUNG**
STATIONARY VIBRATION INSULATION SYSTEM AND METHOD OF CONTROLLING SAME
SYSTÈME STATIONNAIRE D'ISOLATION CONTRE LES VIBRATIONS AINSI QUE SON PROCÉDÉ DE RÉGULATION

(43) Veröffentlichungstag der Anmeldung: 21.10.2020
(73) Patentinhaber: Integrated Dynamics Engineering GmbH, 65479 Raunheim (DE)
(72) Erfinder: Conrady, Carsten, 64560 Riedstadt (DE); Hartgers, Han, 55122 Mainz (DE); Dollak, Björn, 65719 Hochheim (DE)
(74) Vertreter: Blumbach · Zinngrebe Patentanwälte PartG mbB

(56) Entgegenhaltungen:
- CN-Y- 201 340 553
- US-A1- 2016 097 436

## Beschreibung

### Gebiet der Erfindung

Die Erfindung betrifft ein stationäres Schwingungsisolationssystem sowie ein Verfahren zu dessen Regelung und einen Isolator für ein stationäres Schwingungsisolationssystem.

Insbesondere betrifft die Erfindung ein stationäres Schwingungsisolationssystem, auf welchem eine Maschine zur Prozessierung von Halbleiterbauelementen und/oder nanostrukturierten Elementen, insbesondere von Wafern, Masken oder Displaysubstraten, oder zur Vermessung von Halbleiterbauelementen und/oder nanostrukturierten Elementen, wie z.B. ein Elektronenstrahlmikroskop, angeordnet ist.

Weiter können auch Laborgeräte und/oder medizinische Geräte, wie z.B. bildgebenden Untersuchungsgeräte wie Magnetresonanztomographen (MRT) auf dem stationären Schwingungsisolationssystem angeordnet sein.

### Hintergrund der Erfindung

Stationäre Schwingungsisolationssysteme werden insbesondere in der Halbleiterindustrie zu Lagerungen von Bearbeitungsmaschinen, wie z.B. Lithographiegeräten und Messeinrichtungen, wie z.B. Elektronenstrahlmikroskopen, verwendet, um empfindliche Geräte zur Prozessierung von Halbleiterbauelementen schwingungsisoliert zu lagern.

Ein derartiges Schwingungsisolationssystem besteht in der Regel aus einer Platte, welche auf zumindest drei Isolatoren, die jeweils eine Feder umfassen, schwingungsisoliert gelagert ist.

Auf der Platte sind die Geräte zur Prozessierung von Halbleiterbauelementen angeordnet und werden so vor Schwingungen geschützt. Platte und darauf angeordnete Geräte bilden zusammen die schwingungsisoliert gelagerte Last.

Aus der Praxis bekannt sind insbesondere aktive Schwingungsisolationssysteme, bei welchen die Isolatoren neben der Feder Aktoren, insbesondere Magnetaktoren, umfassen, mit denen aktiv Schwingungen entgegengewirkt wird.

Über Sensoren, welche sowohl an der Basis des Isolators, als auch an der schwingungsisoliert gelagerten Last angeordnet sein können, werden Schwingungen erfasst. Auf Basis der Sensorsignale werden die Aktoren angesteuert, um so durch Erzeugung von Gegenkräften Schwingungen zu kompensieren.

Mittels einer derartigen aktiven Regelung kann sowohl von außen in das System prolongierenden Schwingungen als auch Schwingungen entgegengewirkt werden, die von der schwingungsisoliert gelagerten Last selbst erzeugt werden (z.B. von einer verfahrbaren Bühne oder einem sich bewegenden Roboter).

Die Patentschrift EP 2 295 829 B1 (Integrated Dynamics Engineering) zeigt ein Schwingungsisolationssystem, bei welchem Aktoren zum Erzeugen von Kompensationskräften in mehreren Freiheitsgraden vorhanden sind.

Derartige Schwingungsisolationssysteme umfassen zum Verarbeiten der Sensorsignale eine Steuereinheit (oft auch als Controller bezeichnet), welche die Sensorsignale erfasst und auf Basis der Sensorsignale Steuersignale erzeugt, mittels der die Aktoren angesteuert werden, um so Kompensationskräfte zu generieren.

Die Steuereinheit ist dabei als zentrale Recheneinheit ausgebildet, an welcher sowohl die Sensoren als auch die Aktoren sämtlicher Isolatoren des Schwingungsisolationssystems angeschlossen sind.

Dies hat zum einen hohen Verkabelungsaufwand zur Folge. Insbesondere müssen in der Regel von der Steuereinheit zu den Sensoren Leitungen verlegt werden, über welche derart hohe Ströme laufen, da die Aktoren, die die Gegenkräfte erzeugen, hierüber angesteuert werden können.

Des Weiteren hängt die Anzahl der maximal anschließbaren Isolatoren bauartbedingt von der Steuereinheit ab.

Jede Steuereinheit ist für den Anschluss einer maximalen Anzahl von Isolatoren vorgesehen, was dazu führt, dass ein Schwingungsisolationssystem nicht unbegrenzt mit Schwingungsisolatoren nachgerüstet werden kann, ohne die Steuereinheit auszutauschen.

Die Patentschrift US 2009/078847 Al zeigt ein Schwingungsisolationssystem mit einer Mehrzahl von Isolatoren und Aktoren zur aktiven Schwingungsdämpfung.

### Aufgabe der Erfindung

Der Erfindung liegt demgegenüber die Aufgabe zugrunde, die genannten Nachteile des Standes der Technik zu reduzieren.

Es soll insbesondere ein Schwingungsisolationssystem bereitgestellt werden, bei welchem der Verkabelungsaufwand reduziert ist und/oder welches sich hinsichtlich der Anzahl der Isolatoren flexibel skalieren lässt.

### Zusammenfassung der Erfindung

Die Aufgabe der Erfindung wird bereits durch ein stationäres Schwingungsisolationssystem, sowie durch ein Verfahren zur Regelung eines aktiven stationären Schwingungsisolationssystems nach einem der unabhängigen Ansprüche gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein stationäres Schwingungsisolationssystem.

Das stationäre Schwingungsisolationssystem umfasst insbesondere eine schwingungsisoliert gelagerte Maschine zur Prozessierung von Halbleiterbauelementen und/oder nanostrukturierten Elementen. Dabei kann es sich beispielsweise um ein Lithographiegerät, um ein optisches Waferinspektionsgerät, um eine Messeinrichtung, wie z.B. ein Elektronenstrahlmikroskop, etc. handeln. Weiter kann auch ein Laborgerät, ein medizinisches Gerät, insbesondere ein bildgebendes medizinisches Gerät, wie z.B. ein Magnetresonanztomograph, schwingungsisoliert auf dem Schwingungsisolationssystem gelagert sein.

Das Schwingungsisolationssystem umfasst eine Mehrzahl von Isolatoren, mittels der eine schwingungsisoliert gelagerte Last abgestützt ist.

Insbesondere umfasst das Schwingungsisolationssystem zumindest drei Isolatoren, auf welchen eine schwingungsisoliert gelagerte Platte, die zusammen mit den darauf angeordneten Gerätschaften die schwingungsisoliert gelagerte Last bildet, gelagert ist.

Die Isolatoren sind vorzugsweise sowohl in vertikaler als auch in horizontaler Richtung wirksam. Die Isolatoren können eine Feder, insbesondere eine pneumatische Feder, umfassen. Sensoren, Feder und Aktoren können integrierte Bestandteile eines derartigen Isolators sein oder als separate Einheiten ausgebildet sein. Im letzteren Fall bilden die separaten, insbesondere räumlich benachbarten Einheiten von Sensoren, Feder und Aktoren zusammen eine logische Einheit, die die Funktion eines aktiven Schwingungsisolators hat, der nicht nur als passive Feder wirksam ist, sondern der aktiv Schwingungen entgegen wirkt.

Das erfindungsgemäße Schwingungsisolationssystem umfasst eine Mehrzahl von Aktoren, mittels derer Schwingungen aktiv durch Erzeugung von an der schwingungsisoliert gelagerten Last angreifenden Kräften entgegengewirkt wird.

Die Aktoren können insbesondere als Magnetaktoren und/oder als pneumatische Aktoren ausgebildet sein.

Gemäß der Erfindung umfassen die Isolatoren jeweils eine eigene Steuereinheit mit einem Digital-Analog-Wandler zur Ansteuerung der Aktoren des jeweiligen Isolators. Ferner sind die Steuereinheiten der Isolatoren seriell an ein Bussystem angeschlossen.

Gemäß der Erfindung umfasst also jeder Isolator selbst eine Steuereinheit mit einer Prozessoreinheit, auf welcher ein Programm abläuft, um basierend auf Sensorsignalen Steuersignale zur Erzeugung von aktiven Gegenkräften über die Aktoren zu berechnen.

Das errechnete Steuersignal wird über einen Digital-Analog-Wandler beispielsweise in einen Strom umgewandelt, um einen Magnetaktor anzusteuern.

Hierdurch kann der Verkabelungsaufwand deutlich reduziert werden.

Bei einer ersten Ausführungsform der Erfindung sind die Steuereinheiten der Isolatoren mit einer zentralen Steuereinheit verbunden, über die Steuersignale an die Steuereinheiten der Isolatoren übertragen werden.

Steuersignale, sind Signale, die der Ansteuerung der Aktoren auf Basis der Sensorsignale und der Erzeugung von Gegenkräften dienen.

Diese erste Ausführungsform der Erfindung sieht also zusätzlich zu den dezentralen, in den Isolatoren angeordneten Steuereinheiten eine damit verbundene Steuereinheit vor, die selbst Steuersignale errechnet und diese an die Steuereinheiten in den Isolatoren weiterleitet.

Diese Ausführungsform der Erfindung hat den Vorteil, dass die Sensorsignale von sämtlichen Isolatoren in der zentralen Steuereinheit verarbeitet werden können, um hieraus Steuersignale zu generieren.

Aufgrund der Tatsache, dass die zentrale Steuereinheit an die Isolatoren aber nur Steuersignale, vorzugsweise in digitaler Form, weiterleitet, ist der Verkabelungsaufwand reduziert. Insbesondere genügt es, dass die zentrale Steuereinheit mit den Steuereinheiten der Isolatoren über einen Bus verbunden ist.

Bei einer zweiten Ausführungsform der Erfindung ist das stationäre Schwingungsisolationssystem derart ausgebildet, dass die Steuereinheiten der Isolatoren unabhängig von einer zentralen Steuereinheit die Aktoren ansteuern.

Bei dieser Ausführungsform der Erfindung kann auf eine zentrale Steuereinheit vollständig verzichtet werden.

Vorzugsweise sind bei dieser Ausführungsform der Erfindung die einzelnen Isolatoren aber miteinander verbunden, insbesondere über ein Bussystem. Dies ermöglicht der jeweiligen Steuereinheit des Isolators die Sensorsignale der anderen Isolatoren zu berücksichtigen.

So können die einzelnen dezentral verteilten Steuereinheiten der Isolatoren auf einander abgestimmt Steuersignale generieren, mit denen die Aktoren angesteuert werden.

Statt oder zusätzlich zu einer zentralen Steuereinheit können bei einer Ausführungsform der Erfindung die Steuereinheiten der Isolatoren über ein Bussystem auch mit einer zentralen Konfigurations- und/oder Diagnoseeinheit verbunden sein.

Die angeschlossene Konfigurations- und/oder Diagnoseeinheit wirkt bei der Berechnung von Steuersignalen nicht mit, sondern ist dazu ausgebildet, die Funktion der einzelnen Steuereinheiten zu überwachen, um beispielsweise im Fehlerfall eine Fehlermeldung zu generieren. Ferner können über die Konfigurations- und die Diagnoseeinheit auch Daten an die einzelnen dezentralen Steuereinheiten versandt werden, um beispielsweise die Berechnungsroutinen der dezentralen Steuereinheit an die jeweilige Konfiguration des Schwingungsisolationssystems anzupassen.

Die Steuereinheiten der Isolatoren sind seriell an das Bussystem angeschlossen. So ist es lediglich nötig, eine Busleitung von einem Isolator zum anderen Isolator zu verlegen.

Bei einer bevorzugten Ausführungsform der Erfindung ist das Bussystem als Echtzeit-Ethernet-fähiges Bussystem ausgebildet.

Die Verwendung eines Echtzeit-Ethernet-fähigen Bussystems ermöglicht es auf einfache Weise, dass die dezentral verteilten Steuereinheiten auch die Sensorsignale der anderen Isolatoren berücksichtigen können.

Als Echtzeit-Ethernet-fähiges Bussystem kann beispielsweise eine Bussystems nach dem Standard IEC 61158-1:2014 (EtherCAT) verwendet werden.

Vorzugsweise umfassen auch die Steuereinheiten der Isolatoren selbst jeweils einen Analog-Digital-Wandler, mittels dessen ein Sensorsignal verarbeitet wird.

Sensoren, Aktoren und Steuereinheiten sind also Teil des Isolators selbst.

Es ist insbesondere vorgesehen, dass der jeweilige Isolator zumindest eine Feder sowie eine Mehrzahl von Sensoren und Aktoren, sowie eine Steuereinheit zu deren Steuerung umfasst.

Der Isolator muss so nur mit einer Stromversorgung und vorzugsweise auch mit einem Bussystem verbunden werden.

Nachdem die Isolatoren mechanisch mit der schwingungsisoliert gelagerten Last verbunden sind, können diese so unmittelbar und ohne weitere Verkabelung eingesetzt werden.

Vorzugsweise werden über die Aktoren in dem Isolator jeweils Kompensationskräfte in zumindest zwei, besonders bevorzugt zumindest drei Freiheitsgraden erzeugt.

Die Erfindung bezieht sich insbesondere auf ein Schwingungsisolationssystem, bei welchem in den Isolatoren jeweils Aktoren angeordnet sind, über die Kompensationskräfte in drei Translationsfreiheitsgraden und/oder in drei Rotationsfreiheitsgraden erzeugt werden.

Das erfindungsgemäße Schwingungsisolationssystem ist vorzugsweise derart ausgebildet, dass die Anzahl der Isolatoren nicht durch eine zentrale Steuereinheit begrenzt ist.

Insbesondere ermöglicht die Erfindung den Anschluss von mehr als vier, besonderes bevorzugt von mehr als sechs Isolatoren.

Bei einer Weiterbildung der Erfindung umfassen die Isolatoren eine pneumatische Feder, wobei die pneumatische Feder aktiv über die Steuereinheit des Isolators angesteuert wird.

Die pneumatische Feder ist bei dieser Ausführungsform der Erfindung also aktiv in die Regelschleife zur Schwingungsisolation integriert. Die pneumatische Feder umfasst hierfür ein Ventil, welches über die Steuereinheit des Isolators angesteuert wird, um den Druck in der pneumatischen Feder zu regeln. Die aktive Regelung der pneumatischen Feder kann sowohl der Höheneinstellung als auch der aktiven Reduzierung von in das System prolongierenden oder von der schwingungsisoliert gelagerten Last ausgehenden Schwingungen dienen.

Die Erfindung betrifft des Weiteren ein Verfahren zur Regelung eines aktiven stationären Schwingungsisolationssystems, insbesondere eines Schwingungsisolationssystems, wie es vorstehend beschrieben wurde.

Dabei wird über eine Mehrzahl von Isolatoren eine schwingungsisoliert gelagerte Last abgestützt und es wird über eine Mehrzahl von Aktoren Schwingungen aktiv entgegengewirkt.

Gemäß der Erfindung werden die Aktoren über jeweils eine eigene Steuereinheit der Isolatoren angesteuert.

Über die Isolatoren wird so, vorzugsweise basierend auf den Sensorsignalen, unabhängig von externen Steuersignalen eine aktive Schwingungsisolation bereitgestellt.

Dabei kann, wie es bei einer Ausführungsform der Erfindung vorgesehen ist, die jeweilige Steuereinheit aber durchaus die Sensorsignale der anderen Isolatoren berücksichtigen, insbesondere, wenn diese mittels eines Bussystems verbunden sind.

### Kurzbeschreibung der Zeichnungen

Der Gegenstand der Erfindung soll im Folgenden bezugnehmend auf schematisch dargestellte Ausführungsbeispiele anhand der Zeichnungen Fig. 1 bis Fig. 7 näher erläutert werden.
Fig. 1 zeigt in einer schematischen Ansicht den grundsätzlichen Aufbau eines aus dem Stand der Technik bekannten stationären Schwingungsisolationssystems.
Fig. 2 zeigt ein erstes Ausführungsbeispiel der Erfindung, bei welchem die Steuereinheiten der Isolatoren mit einer zentralen Steuereinheit verbunden sind.
Fig. 3 zeigt ein Ausführungsbeispiel, bei welchem die Isolatoren lediglich mit einer Konfigurations- und/oder Diagnoseeinheit verbunden sind.
Bezugnehmend auf Fig. 5 und Fig. 6 soll die einfache Skalierbarkeit der erfindungsgemäßen Schwingungsisolationssysteme näher erläutert werden.
Fig. 6 ist eine schematische Ansicht eines erfindungsgemäßen Isolators.
Fig. 7 ist ein Flussdiagramm der Verfahrensschritte gemäß einem Ausführungsbeispiel der Erfindung.

### Detaillierte Beschreibung der Zeichnungen

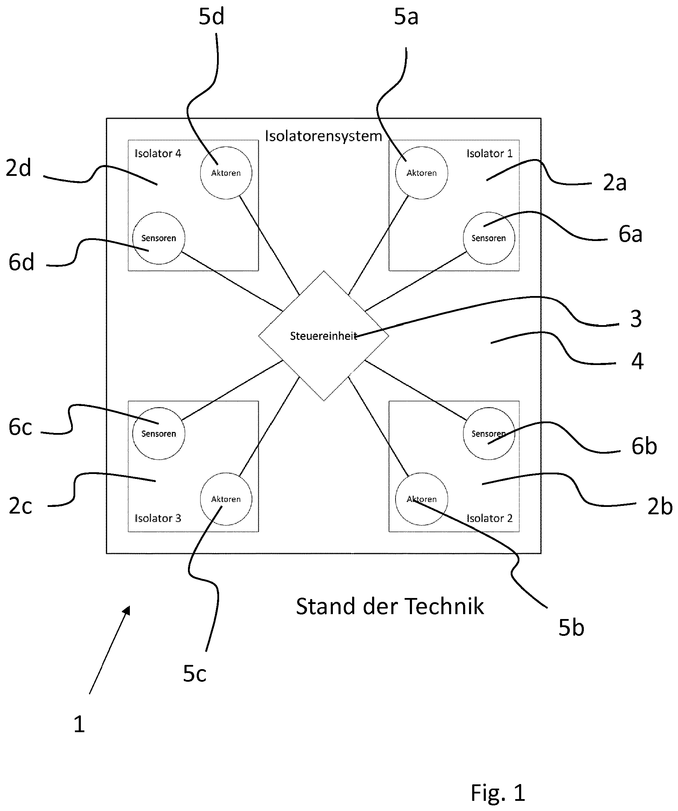

Fig. 1 zeigt in einer schematischen Ansicht den grundsätzlichen Aufbau eines aus dem Stand der Technik bekannten Schwingungsisolationssystems 1.

Das Schwingungsisolationssystem 1 umfasst eine Mehrzahl von Isolatoren 2a - 2d, welche eine Feder umfassen und eine schwingungsisoliert gelagerte Last 4 abstützen.

Die schwingungsisoliert gelagerte Last 4 kann beispielsweise eine Platte umfassen, auf welcher eine Maschine zur Prozessierung von Halbleiterbauelementen (nicht dargestellt) schwingungsisoliert gelagert ist.

Jeder der Isolatoren 2a - 2d umfasst Aktoren 5a - 5d sowie Sensoren 6a - 6d. Über die Sensoren 6a - 6d werden Schwingungen der schwingungsisoliert gelagerten Last 4 und/oder der mit dem Boden gekoppelten Basis des Isolators erfasst.

Die Sensoren sind mit einer zentralen Steuereinheit 3 verbunden.

Anhand der Signale der Sensoren 6a - 6d errechnet die Steuereinheit 3 Kompensationssignale zur Ansteuerung der Aktoren 5a - 5d.

Hieraus ergibt sich ein sternförmiger Anschluss der Sensoren 6a - 6d und Aktoren 5a - 5d an die Steuereinheit 3.

Dies hat eine aufwendige Verkabelung zur Folge, insbesondere, da die Sensoren 6a - 6d in der Regel ein Analogsignal liefern und da die Aktoren 5a - 5d mit einem Analogsignal angesteuert werden.

Die Steuereinheit ist daher nicht lediglich über Datenübertragungsleitungen mit den Isolatoren 2a bis 2d verbunden, sondern es müssen Leitungen verlegt werden, über die teils hohe Ströme zur Ansteuerung der Aktoren 5a bis 5d übertragen werden.

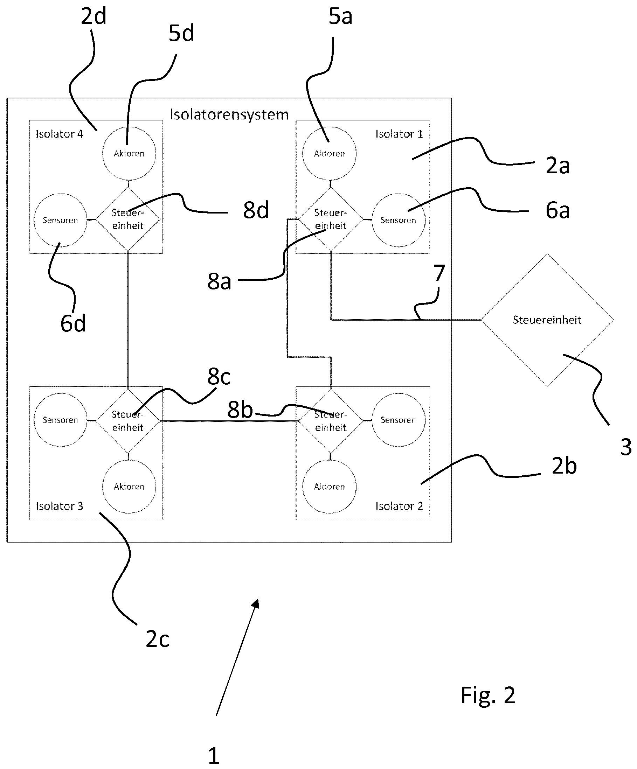

Fig. 2 zeigt in einem ersten Ausführungsbeispiel ein erfindungsgemäßes Schwingungsisolationssystem 1. Gemäß der Erfindung umfasst jeder Isolator 2a - 2d eine eigene Steuereinheit 8a - 8d.

Über die Steuereinheiten 8a - 8d werden die Daten der Sensoren 6a - 6d gesammelt, digitalisiert und zumindest vorverarbeitet.

In diesem Ausführungsbeispiel sind die Isolatoren 2a - 2d über ein Bussystem 7 mit einer zentralen Steuereinheit 3 verbunden.

Die zentrale Steuereinheit 3 sammelt die Daten der Isolatoren 2a - 2d und errechnet anhand der über die Sensoren 6a - 6d und Aktoren 5a - 5d von den dezentralen Steuereinheiten 8a - 8d errechneten Regelparameter, Stellwerte für die Aktoren 5a - 5d.

Diese Stellwerte werden über das Bussystem 7 zu den Steuereinheiten 8a - 8d der einzelnen Isolatoren 2a - 2d übertragen.

Durch die Verwendung des Bussystems 7 wird der Verkabelungsaufwand reduziert. Es ist nur noch ein Buskabel und eine Spannungsversorgung für jeden Isolator 2a - 2d erforderlich.

Bei dieser Ausführungsform werden also die Regelparameter in der zentralen Steuereinheit 3 gesetzt. Die Sensordaten werden von den Isolatoren 2a - 2d zu der zentralen Steuereinheit 3 übermittelt. In der zentralen Steuereinheit 3 werden die Daten ausgewertet und die Stellwerte für die Aktoren 5a - 5d berechnet.

Da jeder Isolator 2a - 2d eine eigene Steuereinheit 8a - 8d umfasst, ist es möglich, Berechnungsoperationen von der zentralen Steuereinheit 3 auszulagern und/oder die Sensordaten vorgefiltert zu der zentralen Steuereinheit 3 zu senden.

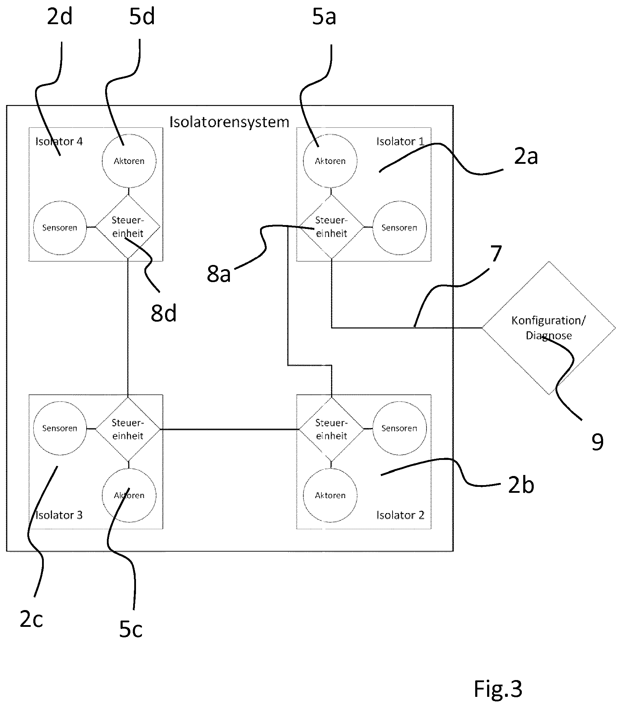

Fig. 3 zeigt ein alternatives Ausführungsbeispiel der Erfindung.

Gemäß des in Fig. 3 dargestellten Ausführungsbeispiels werden die Daten der Sensoren direkt in den Steuereinheiten 8a - 8d der Isolatoren 2a - 2d verarbeitet.

Jeder Isolator 2a - 2d verfügt über eigene Regelparameter, anhand derer die Aktoren 5a - 5d gesteuert werden.

Eine zentrale Steuereinheit, wie in dem Ausführungsbeispiel gemäß Fig. 2, ist daher nicht erforderlich.

In diesem Ausführungsbeispiel sind die Isolatoren 2a - 2d bzw. die Steuereinheiten 8a - 8d der Isolatoren 2a - 2d über ein Bussystem 7 mit einer Konfigurations- und/oder Diagnoseeinheit 9 verbunden.

Über die Konfigurations- und/oder Diagnoseeinheit 9 können Daten mit den Steuereinheiten 8a - 8d ausgetauscht werden. Die Konfigurations- und/oder Diagnoseeinheit 9 errechnet aber keine Regelwerte zur Ansteuerung der Aktoren 5a - 5d auf Basis der Sensorsignale, sondern dient allein dem Aufspielen von Daten zur Konfiguration und/oder zur Fehlerkontrolle.

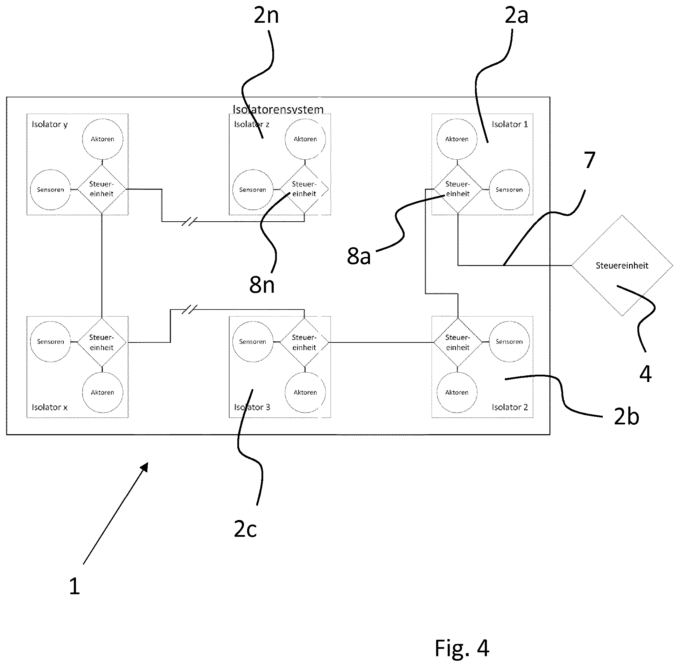

Wie in Fig. 4 illustriert ist, ermöglicht die Erfindung eine einfache Skalierbarkeit des Schwingungsisolationssystems 1 hinsichtlich der Anzahl an Isolatoren 2a - 2n.

Die Isolatoren 2a - 2n sind seriell an ein Bussystem 7 angeschlossen.

Es werden von der zentralen Steuereinheit 4 ausgehend keine Einzelleitungen für jeden Sensor und Aktor benötigt.

Ansonsten entspricht das Ausführungsbeispiel gemäß Fig. 4 dem Ausführungsbeispiel gemäß Fig. 2.

Es bezieht sich also auf die Ausführungsform der Erfindung, bei welcher trotz der den Isolatoren 2a - 2n zugeordneten dezentralen Steuereinheiten 8a - 8n eine zusätzliche zentrale Steuereinheit 4 vorgesehen ist.

Da die zentrale Steuereinheit 4 aber lediglich an dem Bussystem 7 angeschlossen ist, kann diese unabhängig von der Anzahl der Isolatoren 2a - 2n in die aktive Schwingungsisolation eingebunden sein.

Die Anzahl der Isolatoren 2a - 2n ist daher allenfalls durch die maximale Datenübertragungsrate des Bussystems 7 begrenzt, welche aber in der Regel so hoch, dass diese für die in der Praxis sinnvolle Anzahl an Isolatoren 2a- 2n keine Rolle spielt.

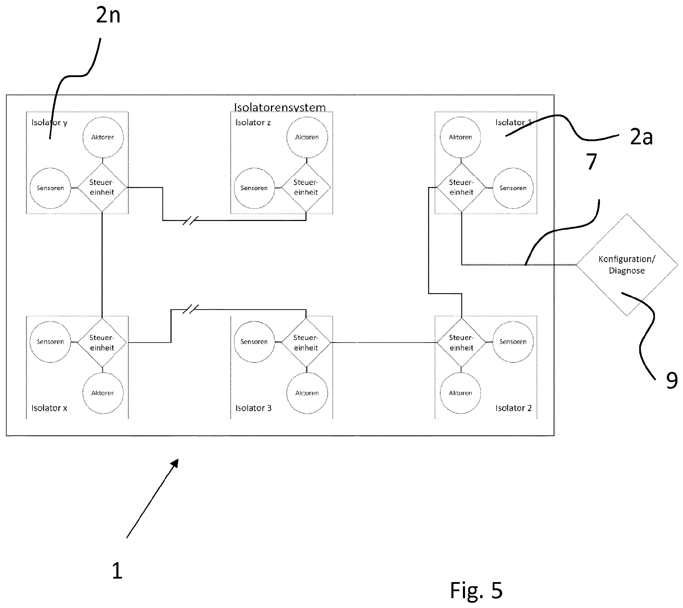

Wie in Fig. 5 dargestellt, gilt dies auch für ein Schwingungsisolationssystem 1, bei dem die Isolatoren 2a - 2n nicht mit einer zentralen Steuereinheit, sondern, hier in diesem Ausführungsbeispiel lediglich mit einer Konfigurations-/Diagnoseeinheit 9, verbunden sind.

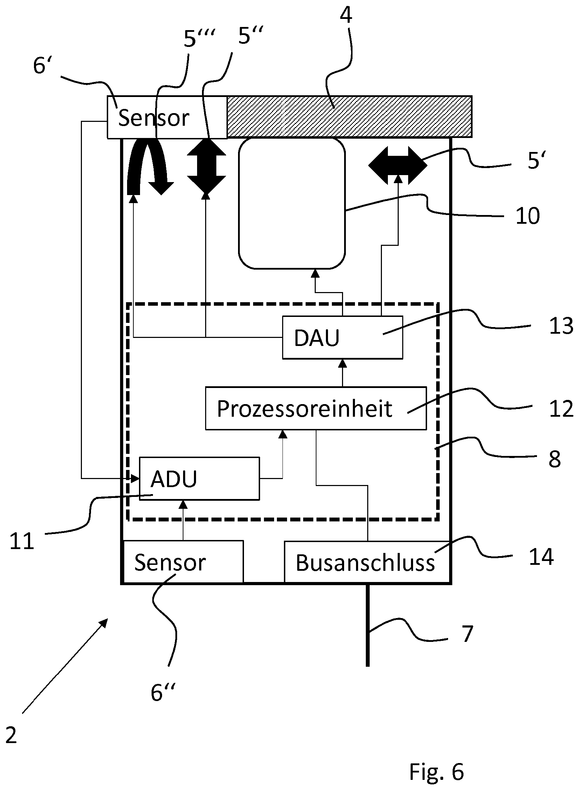

Fig. 6 zeigt schematisch den Aufbau eines Isolators 2, wie er insbesondere für das in Fig. 2 bis Fig. 5 dargestellte Schwingungsisolationssystem verwendet werden kann.

Der Isolator 2 umfasst eine Feder 10, welche in diesem Ausführungsbeispiel als pneumatische Feder ausgebildet ist.

Die Feder ist sowohl in horizontaler als auch in vertikaler Richtung wirksam und stützt die schwingungsisoliert gelagerte Last 4 auf dem Isolator 2 ab.

Der Isolator 2 umfasst ferner die Aktoren 5', 5" und 5‴.

In dieser schematischen Darstellung werden über die Aktoren 5' und 5" translatorische Kompensationskräfte und über den Aktor 5‴ rotatorische Kompensationskräfte erzeugt.

Der Isolator 2 umfasst eine eigene Steuereinheit 8, über die Aktoren 5' - 5‴ angesteuert werden.

Die Steuereinheit 8 verarbeitet hierzu Sensorsignale.

In diesem Ausführungsbeispiel ist zumindest ein Sensor 6' vorgesehen, welcher Schwingungen der schwingungsisoliert gelagerten Last 4 erfasst sowie zumindest ein weiterer Sensor 6'', welcher Schwingungen der Basis, also vom Boden prolongierende Schwingungen, erfasst. Die Wirkrichtung der Sensoren 6', 6" ist in dieser schematischen Darstellung nicht dargestellt. Es versteht sich, dass vorzugsweise für verschiedene Freiheitsgrade verschiedene Sensoren verwendet werden, entsprechend der Aktoren 5' - 5‴ für verschiedene Freiheitsgrade.

Auf Basis der Signale der Sensoren 6' und 6" steuert die Steuereinheit die Aktoren 5' - 5‴ an, um Schwingungen durch Erzeugung von Gegenkräften zu reduzieren.

Hierzu umfasst die Steuereinheit 8 im Konkreten einen Analog-Digital-Wandler 11, über den das analoge Sensorsignal in ein digitales Signal umgewandelt wird, welches an eine Prozessoreinheit 12 der Steuereinheit weitergeleitet wird, auf welcher ein Programm abläuft. Es versteht sich, dass der Analog-Digital-Wandler 11 an beliebiger Stelle des Isolators 2, also z.B. in der Steuereinheit 8 oder auch im Sensor 6', 6" selbst, angeordnet sein kann.

Über die Prozessoreinheit 12 wird ein digitales Steuersignal erzeugt, welches an einen Digital-Analog-Wandler 13 weitergeleitet wird.

Über den Digital-Analog-Wandler 13 werden die Aktoren 5' bis 5‴, welche vorzugsweise als Magnetaktoren ausgebildet sind, zur aktiven Schwingungsisolation angesteuert, indem aus den digitalen Steuersignalen Ströme erzeugt werden, über die der Magnetaktor Gegenkräfte erzeugt. Es versteht sich, dass auch der Digital-Analog-Wandler 13 an beliebiger Stelle des Isolators 2 angeordnet sein kann.

In diesem Ausführungsbeispiel ist auch die Feder 10 in die aktive Schwingungsisolation eingebunden.

Über einen Digital-Analog-Wandler 13 wird auch ein analoges Steuersignal für ein Ventil erzeugt, über das der Druck in der Feder 10 geregelt wird.

Der Isolator 2 umfasst den Busanschluss 14, mittels dessen dieser an ein Bussystem 7 angeschlossen wird. Über das Bussystem 7 kann der Isolator 2, bzw. die Steuereinheit 8 des Isolators 2 mit anderen Isolatoren und/oder mit einer zentralen Steuereinheit und/oder mit einer Konfigurations- und/oder Diagnoseeinheit kommunizieren.

Ansonsten benötigt der Isolator 2 lediglich eine Stromversorgung (nicht dargestellt).

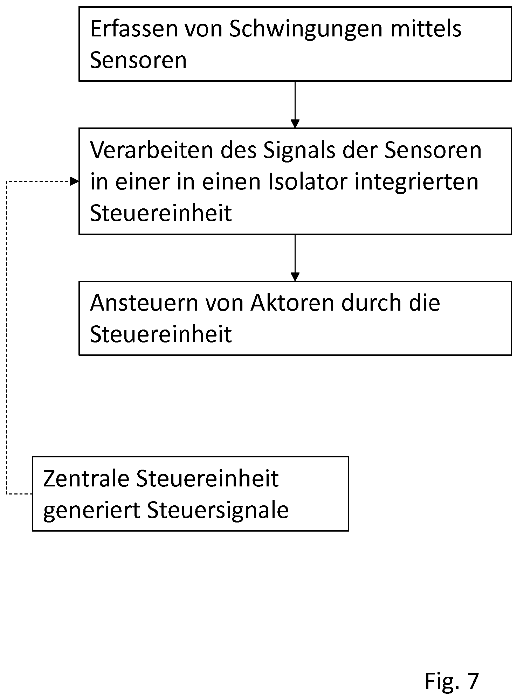

Fig. 7 ist ein schematisches Flussdiagramm des Grundprinzips des erfindungsgemäßen Verfahrens.

Mittels Sensoren werden Schwingungen erfasst.

Anhand des Signals der Sensoren, welches in eine in einen Isolator integrierte Steuereinheit verarbeitet wird, werden die Aktoren der Isolatoren durch die integrierte Steuereinheit angesteuert.

Optional können über eine übergeordnete zentrale Steuereinheit Steuersignale generiert werden.

Durch die Erfindung konnte auf einfache Weise der Installationsaufwand eines aktiven Schwingungsisolationssystems reduziert und gleichzeitig Skalierbarkeit hinsichtlich der Anzahl an Isolatoren erhöht werden.

### Bezugszeichenliste

- 1: Schwingungsisolationssystem
- 2, 2a-2n: Isolator
- 3: zentrale Steuereinheit
- 4: isoliert gelagerte Last
- 5, 5a-5n: Aktor
- 6, 6a-6n: Sensor
- 7: Bussystem
- 8, 8a-8n: Steuereinheit eines Isolators
- 9: Konfigurations-/Diagnoseeinheit
- 10: Feder
- 11: Analog-Digital-Wandler
- 12: Prozessoreinheit
- 13: Digital-Analog-Wandler
- 14: Busanschluss

## Patentansprüche

1. Stationäres Schwingungsisolationssystem (1), umfassend eine Mehrzahl von Isolatoren (2, 2a-2n), mittels der eine schwingungsisoliert gelagerte Last (4) abgestützt ist, wobei das Schwingungsisolationssystem (1) eine Mehrzahl von Aktoren (5, 5a-5n) umfasst, mittels derer Schwingungen aktiv entgegengewirkt wird,
wobei die Isolatoren (2, 2a-2n) jeweils eine eigene Steuereinhei umfassen, **dadurch gekennzeichnet, dass** die Steuereinheiten der Isolatoren jeweils einen Digital-Analog-Wandler (13) zur Ansteuerung der Aktoren (5, 5a-5n) umfassen, wobei die Steuereinheiten (8, 8a-8n) der Isolatoren (2, 2a-2n) seriell an ein Bussystem (7) angeschlossen sind.

2. Stationäres Schwingungsisolationssystem (1) nach Anspruch 1, wobei die Steuereinheiten (8, 8a-8n) der Isolatoren (2, 2a-2n) mit einer zentralen Steuereinheit (3) verbunden sind, über die Steuersignale an die Steuereinheiten (8, 8a-8n) der Isolatoren (2, 2a-2n) übertragen werden.

3. Stationäres Schwingungsisolationssystem (1) nach Anspruch 1, wobei die Steuereinheiten (8, 8a-8n) der Isolatoren (2, 2a-2n) unabhängig von einer zentralen Steuereinheit (3) die Aktoren (5, 5a-5n) ansteuern.

4. Stationäres Schwingungsisolationssystem (1) nach einem der vorstehenden Ansprüche,
wobei die Steuereinheiten (8, 8a-8n) der Isolatoren (2, 2a-2n) über das Bussystem (7) miteinander und/oder mit einer zentralen Steuereinheit (3) und/oder mit einer zentralen Konfigurations- und/oder Diagnoseeinheit verbunden sind.

5. Stationäres Schwingungsisolationssystem (1) nach einem der beiden vorstehenden Ansprüche, wobei das Bussystem (7) als Echtzeit-Ethernet-fähiges Bussystem, insbesondere nach IEC 61158-1:2014.

6. Stationäres Schwingungsisolationssystem (1) nach einem der beiden vorstehenden Ansprüche, wobei die Steuereinheiten (8, 8a-8n) der Isolatoren (2, 2a-2n) jeweils einen Analog-Digital-Wandler (11) umfassen, mittels dessen ein Sensorsignal verarbeitet wird.

7. Stationäres Schwingungsisolationssystem (1) nach einem der vorstehenden Ansprüche,
wobei die Aktoren (5, 5a-5n) und/oder Sensoren (6, 6a-6n) in den Isolatoren (2, 2a-2n) integriert sind.

8. Stationäres Schwingungsisolationssystem (1) nach einem der vorstehenden Ansprüche,
wobei über die Aktoren (5, 5a-5n) Kompensationskräfte in zumindest zwei, vorzugsweise in zumindest drei Freiheitsgraden erzeugt werden, insbesondere wobei über die Aktoren (5, 5a-5n) Kompensationskräfte in drei Translationsfreiheitsgraden und/oder in drei Rotationsfreiheitsgraden erzeugt werden.

9. Stationäres Schwingungsisolationssystem (1) nach einem der vorstehenden Ansprüche,
wobei das Schwingungsisolationssystem (1) eine schwingungsisoliert gelagerte Maschine zur Prozessierung, insbesondere Bearbeitung oder Vermessung, von Halbleiterbauelementen und/oder nanostrukturierten Elementen und/oder ein Laborgerät, medizinisches Gerät, insbesondere einen Magnetresonanztomograph, umfasst.

10. Stationäres Schwingungsisolationssystem (1) nach einem der vorstehenden Ansprüche,
**dadurch gekennzeichnet, dass**
das Schwingungsisolationssystem (1) derart ausgebildet ist, dass die Anzahl an Isolatoren (2, 2a-2n) nicht durch eine zentrale Steuereinheit (3) begrenzt ist.

11. Stationäres Schwingungsisolationssystem (1) nach einem der vorstehenden Ansprüche,
wobei die Isolatoren (2, 2a-2n) jeweils eine pneumatische Feder umfassen, wobei die pneumatische Feder aktiv über die Steuereinheit des Isolators (2, 2a-2n) angesteuert wird.

12. Verfahren zur Regelung eines aktiven stationären Schwingungsisolationssystems (1), nach einem der vorstehenden Ansprüche,
wobei über eine Mehrzahl von Isolatoren (2, 2a-2n) eine schwingungsisoliert gelagerte Last (4) abgestützt wird, und über eine Mehrzahl von Aktoren (5, 5a-5n) Schwingungen aktiv entgegengewirkt wird,
wobei die Aktoren (5, 5a-5n) über jeweils eine eigene Steuereinheit der Isolatoren (2, 2a-2n) angesteuert werden,
**dadurch gekennzeichnet, dass**
die Steuereinheiten der Isolatoren (2, 2a-2n) seriell an ein Bussystem angeschlossen sind.

13. Verfahren nach dem vorstehenden Anspruch, wobei über die Isolatoren (2, 2a-2n) basierend auf Sensorsignalen unabhängig vom externen Steuersignalen eine aktive Schwingungsisolation bereitgestellt wird.

## Claims

1. Stationary vibration isolation system (1) comprising a plurality of isolators (2, 2a-2n) by means of which a load (4) which is mounted in a vibration isolated manner is supported, wherein the vibration isolation system (1) comprises a plurality of actuators (5, 5a-5n) by means of which vibrations are actively countered, wherein each isolator comprises its own control unit, **characterized in that** the control units of the isolators (2, 2a-2n) each comprise a digital-analog converter for control of the actuators (5, 5a-5n), wherein the control units (8, 8a-8n) of the isolators (2, 2a-2n) are connected in-series with the bus system.

2. Stationary vibration isolation system (1) according to claim 1, wherein the control units (8, 8a-8n) of the isolators (2, 2a-2n) are connected with a central control unit (3) via which the control signals are transmitted to the control units (8, 8a-8n) of the isolators (2, 2a-2n).

3. Stationary vibration isolation system (1) according to claim 1, wherein the control units (8, 8a-8n) of the isolators (2, 2a-2n) control the actuators, independently of a center control unit (3).

4. Stationary vibration isolation system (1) according to one of the preceding claims, wherein the control units (8, 8a-8n) of the isolators (2, 2a-2n) are connected via a bus system (7) with one another and/or with a central control unit (3) and/or with a central configuration and/or diagnostic unit.

5. Stationary vibration isolation system (1) according to one of the two preceding claims, wherein the bus system (7) is designed as a real time ethernet capable bus system, in particular according to IEC 61158-1:2014.

6. Stationary vibration isolation system (1) according to one of the two preceding claims, wherein the control units (8, 8a-8n) of the isolators (2, 2a-2n) each comprise an analog-digital converter (11) by means of means of which a sensor signal is processed.

7. Stationary vibration isolation system (1) according to one of the preceding claims, wherein the actuators (5, 5a-5n) and/or sensors (6, 6a-6n) are integrated into the isolators (2, 2a-2n).

8. Stationary vibration isolation system (1) according to one of the preceding claims, wherein via the actuators (5, 5a-5n) compensating forces are generated in at least two, preferably at least three degrees of freedom, in particular wherein via the actuators (5, 5a-5n) compensation forces are generated in three translational degrees of freedom and/or in three rotational degrees of freedom.

9. Stationary vibration isolation system (1) according to one of the preceding claims, wherein vibration isolation system comprises a machine, mounted in a vibration isolated manner, for processing, in particular for machining or measuring of semiconductor components and/or of nanostructured elements, and/or laboratory equipment, medical device, in particular an magnetic resonance scanner.

10. Stationary vibration isolation system (1) according to one of the preceding claims, **characterized in that** the vibration isolation system is designed such a way that the number of isolators (2, 2a-2n) is not limited by a central control unit (3).

11. Stationary vibration isolation system (1) according to one of the preceding claims, wherein each respective isolator (2, 2a-2n) includes a pneumatic spring, wherein the pneumatic spring is actively controlled via the control unit of the isolator (2, 2a-2n).

12. Method for controlling an active stationary vibration isolation system (1) according to one of the preceding claims, wherein a load (4) which is mounted in a vibration isolated manner is supported by a plurality of isolators (2, 2a-2n) and vibrations are actively countered via a plurality of actuators (5, 5a-5n), wherein the actuators (5, 5a-5n) are each controlled by a separate control unit of the isolators (2, 2a-2n),
**characterized in that**,
the control units of the isolators (2, 2a-2n) are connected in-series with the bus system.

13. Method according to the preceding claim, whereby active vibration isolation is provided via the isolators (2, 2a-2n) based on sensor signals, independently of external control signals.

## Revendications

1. Système stationnaire d'isolation contre les vibrations (1), comprenant une pluralité d'isolateurs (2, 2a-2n) par le biais desquels est supportée une charge montée isolée contre les vibrations (4), dans lequel le système d'isolation contre les vibrations (1) comprend une pluralité d'actionneurs (5, 5a-5n) par le biais desquels ses vibrations sont activement contrées,
dans lequel les isolateurs (2, 2a-2n) comprennent respectivement leur propre unité de commande, **caractérisé en ce que** les unités de commande des isolateurs comprennent respectivement un convertisseur numérique-analogique (13) pour commander les actionneurs (5, 5a-5n), les unités de commande (8, 8a-8n) des isolateurs (2, 2a-2n) étant connectées en série à un système de bus (7).

2. Système stationnaire d'isolation contre les vibrations (1) selon la revendication 1, dans lequel les unités de commande (8, 8a-8n) des isolateurs (2, 2a-2n) sont connectées à une unité de commande centrale (3) par l'intermédiaire de laquelle les signaux de commande sont transmis aux unités de commande (8, 8a-8n) des isolateurs (2, 2a-2n).

3. Système stationnaire d'isolation contre les vibrations (1) selon la revendication 1, dans lequel les unités de commande (8, 8a-8n) des isolateurs (2, 2a-2n) commandent les actionneurs (5, 5a-5n) indépendamment d'une unité de commande centrale (3).

4. Système stationnaire d'isolation contre les vibrations (1) selon l'une des revendications précédentes, dans lequel les unités de commande (8, 8a-8n) des isolateurs (2, 2a-2n) sont connectées entre elles et/ou à une unité de commande centrale (3) et/ou à une unité de configuration et/ou de diagnostic centrale par l'intermédiaire du système de bus (7).

5. Système stationnaire d'isolation contre les vibrations (1) selon l'une des deux revendications précédentes, dans lequel le système de bus (7) est un système de bus compatible Ethernet en temps réel, en particulier selon la norme CEI 61158-1:2014.

6. Système stationnaire d'isolation contre les vibrations (1) selon l'une des deux revendications précédentes, dans lequel les unités de commande (8, 8a-8n) des isolateurs (2, 2a-2n) comprennent respectivement un convertisseur analogique-numérique (11) par le biais duquel un signal de capteur est traité.

7. Système stationnaire d'isolation contre les vibrations (1) selon l'une des revendications précédentes, dans lequel les actionneurs (5, 5a-5n) et/ou les capteurs (6, 6a-6n) sont intégrés dans les isolateurs (2, 2a-2n).

8. Système stationnaire d'isolation contre les vibrations (1) selon l'une des revendications précédentes, dans lequel des forces de compensation sont générées par l'intermédiaire des actionneurs (5, 5a-5n) dans au moins deux, de préférence dans au moins trois degrés de liberté, en particulier dans lequel des forces de compensation sont générées par l'intermédiaire des actionneurs (5, 5a-5n) dans trois degrés de liberté de translation et/ou dans trois degrés de liberté de rotation.

9. Système stationnaire d'isolation contre les vibrations (1) selon l'une des revendications précédentes, dans lequel le système d'isolation contre les vibrations (1) comprend une machine montée isolée contre les vibrations pour le traitement, en particulier l'usinage ou la mesure, de composants semi-conducteurs et/ou d'éléments nanostructurés et/ou un dispositif de laboratoire, un appareil médical, en particulier un tomographe à résonance magnétique.

10. Système stationnaire d'isolation contre les vibrations (1) selon l'une des revendications précédentes, **caractérisé en ce que**
le système d'isolation contre les vibrations (1) est conçu de telle sorte que le nombre d'isolateurs (2, 2a-2n) n'est pas limité par une unité de commande centrale (3).

11. Système stationnaire d'isolation contre les vibrations (1) selon l'une des revendications précédentes, dans lequel les isolateurs (2, 2a-2n) comprennent respectivement un ressort pneumatique, dans lequel le ressort pneumatique est activement commandé par l'intermédiaire de l'unité de commande de l'isolateur (2, 2a-2n).

12. Procédé de régulation d'un système stationnaire d'isolation contre les vibrations (1) actif, selon l'une des revendications précédentes,
dans lequel une charge montée isolée contre les vibrations (4) est supportée par une pluralité d'isolateurs (2, 2a-2n), et les vibrations sont activement contrées par l'intermédiaire d'une pluralité d'actionneurs (5, 5a-5n),
dans lequel les actionneurs (5, 5a-5n) sont commandés respectivement par l'intermédiaire d'une unité de commande propre aux isolateurs (2, 2a-2n),
**caractérisé en ce que**
les unités de commande des isolateurs (2, 2a-2n) sont connectées en série à un système de bus.

13. Procédé selon la revendication précédente, dans lequel une isolation active contre les vibrations est assurée par l'intermédiaire des isolateurs (2, 2a-2n) sur la base de signaux de capteurs indépendamment des signaux de commande externes.
